(19) Europäisches Patentamt
European Patent Office
Office européen des brevets

(11) **EP 4 610 887 A1**

(12) **EUROPEAN PATENT APPLICATION**
published in accordance with Art. 153(4) EPC

(43) Date of publication:
**03.09.2025 Bulletin 2025/36**

(21) Application number: **23881427.1**

(22) Date of filing: **25.08.2023**

(51) International Patent Classification (IPC):
**G06N 3/08** $^{(2023.01)}$

(52) Cooperative Patent Classification (CPC):
**G06F 9/50; G06N 3/042; G06N 3/063; G06N 3/08**

(86) International application number:
**PCT/CN2023/114920**

(87) International publication number:
**WO 2024/087844 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 CN 202211316847**

(71) Applicant: **Beijing Volcano Engine Technology Co., Ltd.**
**Beijing 100190 (CN)**

(72) Inventor: **CHEN, Hongzhi**
**Beijing 100028 (CN)**

(74) Representative: **Marks & Clerk LLP**
**15 Fetter Lane**
**London EC4A 1BW (GB)**

(54) **GRAPH NEURAL NETWORK TRAINING METHOD AND SYSTEM, AND ABNORMAL ACCOUNT IDENTIFICATION METHOD**

(57) The present disclosure provides a method and system for training a graph neural network and a method of identifying an abnormal account. The method of training a graph neural network includes: obtaining initial graph structure data corresponding to the terminal device, the initial graph structure data respectively obtained by the plurality of distributed training terminals being derived from the same sample graph structure data; and performing the following graph structure data processing stage and graph neural network training stage cyclically, until a target neural network satisfying a training requirement is obtained: determining a processing opportunity for currently performing a graph structure data processing stage based on historical execution data of historically performing a graph structure data processing stage and a graph neural network training stage; performing, based on the processing opportunity, graph structure data processing on the initial graph structure data in the graph structure data processing stage, to generate target graph structure data; the graph structure data processing comprising data sampling processing and feature extraction processing; and training, based on the target graph structure data, the target neural network in the graph neural network training stage.

S101

OBTAIN INITIAL GRAPH STRUCTURE DATA CORRESPONDING TO THE TERMINAL DEVICE, THE INITIAL GRAPH STRUCTURE DATA RESPECTIVELY OBTAINED BY THE PLURALITY OF DISTRIBUTED TRAINING TERMINALS BEING DERIVED FROM THE SAME SAMPLE GRAPH STRUCTURE DATA

S102

PERFORM A GRAPH STRUCTURE DATA PROCESSING STAGE AND GRAPH NEURAL NETWORK TRAINING STAGE CYCLICALLY, UNTIL A TARGET NEURAL NETWORK SATISFYING A TRAINING REQUIREMENT IS OBTAINED

FIG. 1

EP 4 610 887 A1

## Description

The present disclosure claims priority to Chinese Patent Application No. 202211316847.1, filed on October 26, 2022, and entitled 'METHOD AND SYSTEM FOR TRAINING A GRAPH NEURAL NETWORK, AND METHOD OF IDENTIFYING AN ABNORMAL ACCOUNT', which is incorporated herein by reference in its entirety.

## FIELD

The present disclosure relates to the field of computer technologies, and in particular, to a method and system for training a graph neural network, and a method of identifying an abnormal account.

## BACKGROUND

With the development of artificial intelligence technology, deep learning algorithms have achieved great success in application fields such as image processing and text processing. However, in reality, much of the data, such as social networks, knowledge graphs, and molecular structures, are often difficult to be processed with conventional deep learning algorithms due to its special data forms. In this regard, researchers have proposed various Graph Neural Networks (GNN) models for graph structure data, which have been widely used in content recommendation, drug research, chip design, and other fields.

In the related art, when training a graph neural network, graph structure data is generally processed first, and then training is performed with the processed graph structure data. The two steps are performed serially. However, since the time required for processing graph structure data and the time for training with processed graph structure data may not be consistent, it may result in that the graph structure data of the next round has not been processed. The graph structure data of the current round has been trained, or the graph structure data of the current round has been processed and the graph structure data of the previous round has not yet completed training. This in turn causes one of the processing steps to enter a state of waiting for execution. However, the processing step waiting for execution still occupies computing resources, affecting the utilization rate of computing resources.

## SUMMARY

Embodiments of the present disclosure provide at least a method and system for training a graph neural network, and a method of identifying an abnormal account.

In a first aspect, an embodiment of the present disclosure provides a method of training a graph neural network, applied to any terminal device in a plurality of distributed training terminals for training a same target neural network, the method comprising:

obtaining initial graph structure data corresponding to the terminal device, the initial graph structure data respectively obtained by the plurality of distributed training terminals being derived from the same sample graph structure data; and

performing the following graph structure data processing stage and graph neural network training stage cyclically, until a target neural network satisfying a training requirement is obtained:

determining a processing opportunity for currently performing a graph structure data processing stage based on historical execution data of historically performing a graph structure data processing stage and a graph neural network training stage;

performing, based on the processing opportunity, graph structure data processing on the initial graph structure data in the graph structure data processing stage, to generate target graph structure data; the graph structure data processing comprising data sampling processing and feature extraction processing; and

training, based on the target graph structure data, the target neural network in the graph neural network training stage.

In a possible implementation, the initial graph structure data is allocated based on the following:

segmenting the sample graph structure data based on a breadth first search algorithm, to obtain a plurality of first graph structure data; and

allocating, from the plurality of first graph structure data, the initial graph structure data to the distributed training terminals based on a greedy algorithm, a number of terminals of the distributed training terminals, and a number of segments of the first graph structure data obtained by segmentation.

In a possible implementation, performing the graph structure data processing on the initial graph structure data comprises:

generating second graph structure data for characterizing a dependency relationship between respective operators based on an execution logic of a plurality of sampling processing and a plurality of feature extraction processing;

determining a topological order of the respective operators based on the second graph structure data; and

performing, based on the topological order of the respective operators, a plurality of sampling processing and a plurality of feature extraction processing on the initial graph structure data.

In a possible implementation, determining the processing opportunity for currently performing the graph structure data processing stage based on the historical execution data of historically performing the graph structure data processing stage and the graph neural network training stage comprises:

determining whether to perform the current graph structure data processing at a current time instant based on a performance parameter of the terminal device, a first historical average duration for historically performing the graph structure data processing stage, and a second historical average duration for historically performing the graph neural network training stage; and
in accordance with a determination of performing the current graph structure data processing at the current time instant, determining the processing opportunity as the current time instant; otherwise, redetermining whether to perform the current graph result data processing after a predetermined time interval.

In a possible implementation, training the target neural network based on the target graph structure data comprises:

inputting execution code corresponding to the graph neural network training stage into a target code compiler to obtain third graph structure data generated by the target code compiler after compiling the execution code; and
performing, based on the third graph structure data, data processing on the target graph structure data to implement training of the target neural network.

In a second aspect, an embodiment of the present disclosure provides a system of training a graph neural network, comprising a plurality of distributed training terminals and a database, wherein:

the distributed training terminals are configured to determine a processing opportunity for currently performing a graph structure data processing stage based on historical execution data of historically performing a graph structure data processing stage and a graph neural network training stage; perform, based on the processing opportunity, graph structure data processing on initial graph structure data in the graph structure data processing stage, to generate target graph structure data, the graph structure data processing comprises data sampling processing and feature extraction processing; train, based on the target graph structure data, a target neural network in the graph neural network training stage; and
the database is configured to store an initial graph data structure corresponding to each of the distributed training terminals and send the initial graph data structure to each of the distributed training terminals.

In a third aspect, an embodiment of the present disclosure further provides a method of identifying an abnormal account, comprising:

obtaining a historical browsing record corresponding to a to-be-verified account; and
determining, based on the historical browsing record and a trained target neural network, a target identification result for characterizing whether the to-be-verified account is an abnormal account; wherein the target neural network is trained based on any of the method of training the graph neural network of the first aspect.

In a possible implementation, determining, based on the historical browsing record and the trained target neural network, the target identification result for characterizing whether the to-be-verified account is the abnormal account comprises:

determining, based on the historical browsing record, browsing feature information corresponding to the to-be-verified account;
constructing, based on the browsing feature information, to-be-verified graph structure data corresponding to the to-be-verified account; and
inputting the to-be-verified graph structure data into the target neural network to obtain a target identification result output by the target neural network.

In a possible implementation, after determining the target identification result for characterizing whether the to-be-verified account is the abnormal account, the method further comprises:
in accordance with a determination that the to-be-verified account is the abnormal account, adjusting permission information corresponding to the to-be-verified account to perform permission control on the to-be-verified account.

In a fourth aspect, an embodiment of the present disclosure further provides an apparatus for training a graph neural network, applied to any terminal device in a plurality of distributed training terminals for training a same target neural network, and the apparatus comprises:

a first obtaining module configured to obtain initial graph structure data corresponding to the terminal device, the initial graph structure data respectively obtained by the plurality of distributed training terminals being derived from the same sample graph structure data; and
a cycling module configured to perform the following graph structure data processing stage and graph neural network training stage cyclically, until a target neural network satisfying a training requirement is obtained:
determining a processing opportunity for currently performing a graph structure data processing stage based on historical execution data of historically performing a graph structure data processing stage and a graph neural network training stage; performing, based on the processing opportunity, graph structure data processing on the initial graph structure data in the graph structure data processing stage, to generate target graph structure data; the graph structure data processing comprising data sampling processing and feature extraction processing; and training, based on the target graph structure data, the target neural network in the graph neural network training stage.

In a possible implementation, the initial graph structure data is allocated based on the following:

segmenting the sample graph structure data based on a breadth first search algorithm, to obtain a plurality of first graph structure data; and allocating, from the plurality of first graph structure data, the initial graph structure data to the distributed training terminals based on a greedy algorithm, a number of terminals of the distributed training terminals, and a number of segments of the first graph structure data obtained by segmentation.

In a possible implementation, when performing the graph structure data processing on the initial graph structure data, the cycling module is configured to:

generate second graph structure data for characterizing a dependency relationship between respective operators based on an execution logic of a plurality of sampling processing and a plurality of feature extraction processing; determine a topological order of the respective operators based on the second graph structure data; and perform, based on the topological order of the respective operators, a plurality of sampling processing and a plurality of feature extraction processing on the initial graph structure data.

In a possible implementation, when determining the processing opportunity for currently performing the graph structure data processing stage based on the historical execution data of historically performing the graph structure data processing stage and the graph neural network training stage, the cycling module is configured to:

determine whether to perform the current graph structure data processing at a current time instant based on a performance parameter of the terminal device, a first historical average duration for historically performing the graph structure data processing stage, and a second historical average duration for historically performing the graph neural network training stage; and in accordance with a determination of performing the current graph structure data processing at the current time instant, determine the processing opportunity as the current time instant; otherwise, redetermining whether to perform the current graph result data processing after a predetermined time interval.

In a possible implementation, when training the target neural network based on the target graph structure data, the cycling module is configured to:

input execution code corresponding to the graph neural network training stage into a target code compiler to obtain third graph structure data generated by the target code compiler after compiling the execution code; and perform, based on the third graph structure data, data processing on the target graph structure data to implement training of the target neural network.

In a fifth aspect, an embodiment of the present disclosure further provides an apparatus for identifying an abnormal account, comprising:

a second obtaining module configured to obtain a historical browsing record corresponding to a to-be-verified account; and a determining module configured to determine, based on the historical browsing record and a trained target neural network, a target identification result for characterizing whether the to-be-verified account is an abnormal account, wherein the target neural network is trained based on the method of training the graph neural network of the first aspect.

In a possible implementation, when determining, based on the historical browsing record and the trained target neural network, the target identification result for characterizing whether the to-be-verified account is the abnormal account, the determining module is configured to:

determine, based on the historical browsing record, browsing feature information corresponding to the to-be-verified account; construct, based on the browsing feature information, to-be-verified graph structure data corresponding to the to-be-verified account; and input the to-be-verified graph structure data into the target neural network to obtain a target identification result output by the target neural network.

In a possible implementation, after determining the target identification result for characterizing whether the to-be-verified account is the abnormal account, the determining module is further configured to:

in accordance with a determination that the to-be-verified account is the abnormal account, adjust permission information corresponding to the to-be-verified account to perform permission control on the to-be-verified account.

In a sixth aspect, an embodiment of the present disclosure further provides a computer device, , comprising: a processor, a memory, and a bus, the memory storing machine-readable instructions executable by the processor, when the computer device runs, the processor communicating with the memory through the bus, the machine-readable instructions, when executed by the processor, performing the steps of any of the possible implementations of the first aspect or the third aspect.

In a seventh aspect, an embodiment of the present disclosure further provides a computer-readable storage medium, wherein the computer-readable storage medium having a computer program stored thereon, the computer program, when executed by a processor, performs the steps of any of the possible implementations of the first aspect or the third aspect.

The method and system for training a graph neural network, and a method of identifying an abnormal account provided in the embodiments of the present disclosure perform training of a graph neural network with a distributed training terminal. Herein, in the process of training the graph neural network, a processing opportunity for currently performing a graph structure data processing stage is determined based on historical execution data of historically performing a graph structure data processing stage and a graph neural network training stage, and graph structure data processing stage and graph neural network training stage are performed based on the determined processing opportunity. In this way, by controlling the processing opportunity of the graph structure data processing stage, allocation of computing resources to the graph structure data processing stage and the graph neural network training stage can be adjusted in real time, to implement reasonable allocation of computing resources. Further, by reasonably allocating computing resources to the graph structure data processing stage and the graph neural network training stage, a computing duration of the graph structure data processing stage can be the same as or similar to a computing duration of the graph neural network training stage, to prevent a certain training stage from entering a state of waiting, thereby improving the utilization rate of computing resources.

To make the above objectives, features, and advantages of the present disclosure more comprehensible, the following describes preferred embodiments in detail with reference to the accompanying drawings.

**BRIEF DESCRIPTION OF THE DRAWINGS**

In order to more clearly describe the technical solutions in the embodiments of the present disclosure, the drawings used in the descriptions of the embodiments will be briefly described below. The drawings in the following description are incorporated into and form a part of the specification. These drawings show the embodiments consistent with the present disclosure and are used together with the description to describe the technical solutions of the present disclosure. It should be understood that the following drawings show only some embodiments of the present disclosure, and therefore should not be considered as a limitation on the scope. For those of ordinary skill in the art, other related drawings can be obtained based on these drawings without creative efforts.

FIG. 1 is a flowchart of a method of training a graph neural network according to an embodiment of the present disclosure;
FIG. 2 is a schematic diagram of an architecture of a system of training a graph neural network in the method of training a graph neural network according to an embodiment of the present disclosure;
FIG. 3 is a flowchart of a method of identifying an abnormal account according to an embodiment of the present disclosure;
FIG. 4 is a schematic diagram of an architecture of an apparatus for training a graph neural network according to an embodiment of the present disclosure;
FIG. 5 is a schematic diagram of an architecture of an apparatus for identifying an abnormal account according to an embodiment of the present disclosure; and
FIG. 6 is a schematic diagram of a structure of a computer device according to an embodiment of the present disclosure.

**DETAILED DESCRIPTION**

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. It is obvious that the described embodiments are some but not all of the embodiments of the present disclosure. Usually, components of the embodiments of the present disclosure described and shown in the accompanying drawings may be arranged and designed in various different configurations. Therefore, the detailed description of the embodiments of the present disclosure provided in the accompanying drawings is not intended to limit the scope of the claimed present disclosure, but merely characterizes selected embodiments of the present disclosure. Based on the embodiments of the present disclosure, all other embodiments obtained by a person of ordinary skill in the art without creative efforts fall within the protection scope of the present disclosure.

It should be noted that similar reference numerals and letters denote similar items in the following drawings. Therefore, once an item is defined in one drawing, it is not required to be further defined and explained in subsequent drawings.

The term 'and/or' herein is merely an association relationship describing that three relationships may exist. For example, A and/or B may represent the following three cases: A exists alone, both A and B exist, and B exists alone. In addition, the term 'at least one of' herein characterizes any of a plurality of or any combination of at least two of a plurality of. For example, at least one of A, B, and C may represent: any element selected from the set consisting of A, B, and C.

It may be understood that before using the technical solution disclosed in each embodiment of the present disclosure, a user shall be informed of the type, scope of use, and usage scenario of personal information involved in the present disclosure and the authorization of the user shall be obtained in an appropriate manner in accordance with relevant laws and regulations.

For example, in response to receiving an active request of the user, prompt information is sent to the user to explicitly prompt the user that the operation requested by the user needs to acquire and use the personal information of the user. Therefore, the user can independently choose whether to provide personal information to software or hardware such as an electronic device, an application, a server, or a storage medium that executes the operation of the technical solution of the present disclosure based on the prompt information.

As an optional but non-limiting implementation, in response to receiving an active request of the user, the prompt information may be sent to the user in a pop-up window, for example. The prompt information may be presented in the pop-up window in text. In addition, the pop-up window may further carry a selection control for the user to select 'Agree' or 'Disagree' to provide personal information to the electronic device.

It may be understood that the above notification and user authorization obtaining process is merely illustrative and does not constitute a limitation to the implementation of the present disclosure. Other methods that meet relevant laws and regulations may also be applied to the implementation of the present disclosure.

In the related art, in the process of training a graph neural network, a graph structure data processing stage and a graph neural network training stage are often performed serially, i.e., after the graph data processing is completed, the graph neural network training is performed based on the target graph structure data obtained after the completion of the graph data processing. However, this may result in idling of computing resources of the terminal device. In addition, even if the graph structure data processing stage and the graph neural network training stage are performed in parallel, the computing resources of the terminal device are limited. If the computing resources allocated to each processing stage are not balanced, it may result in that the graph structure data of the next round has not been processed. The graph structure data of the current round has been trained, or the graph structure data of the current round has been processed and the graph structure data of the previous round has not yet completed training. This in turn causes one of the processing steps to enter a state of waiting for execution, which may also result in idling of computing resources.

Based on the above research, the present disclosure provides a method and system for training a graph neural network, and a method of identifying an abnormal account perform training of a graph neural network with a distributed training terminal. Herein, in the process of training the graph neural network, a processing opportunity for currently performing a graph structure data processing stage is determined based on historical execution data of historically performing a graph structure data processing stage and a graph neural network training stage, and graph structure data processing stage and graph neural network training stage are performed based on the determined processing opportunity. In this way, by controlling the processing opportunity of the graph structure data processing stage, allocation of computing resources to the graph structure data processing stage and the graph neural network training stage can be adjusted in real time, to implement reasonable allocation of computing resources. Further, by reasonably allocating computing resources to the graph structure data processing stage and the graph neural network training stage, a computing duration of the graph structure data processing stage can be the same as or similar to a computing duration of the graph neural network training stage, to prevent a certain training stage from entering a state of waiting, thereby improving the utilization rate of computing resources.

For ease of understanding of this embodiment, a method of training a graph neural network disclosed in an embodiment of the present disclosure is first described in detail. An execution subject of the method of training a graph neural network provided in this embodiment of the present disclosure is generally a computer device with a certain computing capability. The computer device includes, for example, a terminal device, a server, or a further processing device. The terminal device may be a user equipment (UE), a mobile device, a user terminal, a terminal, a personal digital assistant (PDA), a handheld device, a computing device, an in-vehicle device, a wearable device, or the like. In some possible implementations, the method of training a graph neural network may be implemented by a processor invoking a computer-readable instruction stored in a memory.

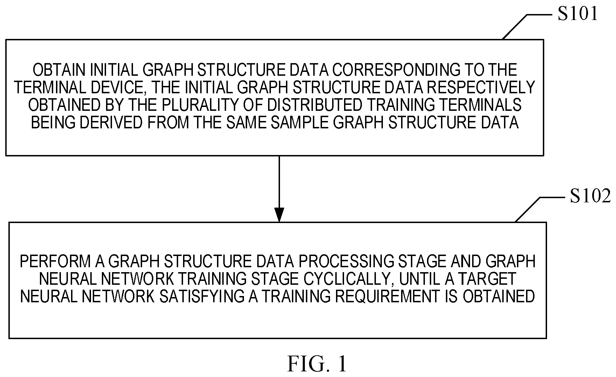

FIG. 1 is a flowchart of a method of training a graph neural network according to an embodiment of the present disclosure. The method is applied to any terminal device in a plurality of distributed training terminals for training a same target neural network, the method comprising S101 and S102, wherein:

S101: Obtain initial graph structure data corresponding to the terminal device, the initial graph structure data respectively obtained by the plurality of distributed training terminals being derived from the same sample graph structure data.

S102: Perform the following graph structure data processing stage and graph neural network training stage cyclically, until a target neural network satisfying a training requirement is obtained.

Herein, the graph structure data processing stage includes the following:

S1021: Determine a processing opportunity for currently performing a graph structure data processing stage based on historical execution data of historically performing a graph structure data processing stage and a graph neural network training stage.

S1022: Perform, based on the processing opportunity, graph structure data processing on the initial graph structure data in the graph structure data processing stage, to generate target graph structure data; the graph structure data processing comprising data sampling processing and feature extraction processing.

The graph neural network training stage includes the following:

S1023: Train, based on the target graph structure data, the target neural network in the graph neural network training stage.

The following is a detailed description of the above steps.

For S101, the sample graph structure data is graph structure data for training the target neural network. The graph structure data consists of a Vertex and an Edge and may be configured to represent an association relationship between elements in fields such as protein analysis, chip design, and automatic driving. A network type of the target neural network may be a neural network capable of processing graph structure data, for example, a graph neural network (GNN) or a graph convolutional network (GCN).

In an actual application, in a distributed training scenario, initial graph structure data is allocated to each of the distributed training terminals, and each of the distributed training terminals performs distributed training based on the allocated graph structure data.

In a possible implementation, the initial graph structure data may be allocated through the following steps A1 and A2:

A1: Segment the sample graph structure data based on a breadth first search algorithm, to obtain a plurality of first graph structure data.

In this specification, the sample graph structure data may include a plurality of vertices and edges. The sample graph structure data including the plurality of vertices and edges may be divided into a plurality of first graph structure data based on a breadth first search algorithm.

A2: Allocate, from the plurality of first graph structure data, the initial graph structure data to the distributed training terminals based on a greedy algorithm, a number of terminals of the distributed training terminals, and a number of segments of the first graph structure data obtained by segmentation.

In this specification, the greedy algorithm may be configured to allocate the plurality of first graph structure data to each of the distributed training terminals, to reduce network data access overhead between each of the distributed training terminals in a subsequent data stage, thereby reducing network resource consumption caused by data transmission and improving the training efficiency of the target neural network.

Specifically, mathematical modeling may be performed based on the number of terminal devices of the distributed training terminal and a number of segments of the first graph structure data obtained by segmentation, to obtain a mathematical model for allocation by the greedy algorithm. Based on the greedy algorithm and the mathematical model, an allocation score is calculated for any first graph structure data, the allocation score being configured to determine a distributed training terminal to which the first graph structure data is allocated. Herein, when calculating the allocation score of the first graph structure data, the allocation score may be calculated based on a type of a vertex included in the first graph structure data and a weight value corresponding to the type of the vertex. Different types of vertices may correspond to different weight values. The type of the vertex may include training, verification, testing, and the like.

For example, allocation for the first graph structure data 'graph structure data 1 ' is used as an example. Allocation scores of the 'graph structure data 1 ' for distributed training terminals 1 to 3 are score 1, score 2, and score 3, respectively, wherein score 1 <score 2 <score 3. Therefore, the 'graph structure data 1 ' may be allocated to the distributed training terminal 1 corresponding to the maximum allocation score based on the allocation scores.

In this way, through the greedy algorithm, a mathematical problem 'How to allocate the plurality of first graph structure data obtained after the sample graph structure data is segmented to each of the distributed training terminals to achieve an optimal effect (i.e., reduce network resource consumption caused by data transmission)' may be converted into 'How to allocate any graph structure data to a proper distributed training terminal to achieve a local optimal effect (i.e., reduce network resource consumption caused by data transmission)'. By calculating an allocation score characterizing the matching degree of each of the first graph structure data and each of the distributed training terminals, the first graph structure data may be allocated to the distributed training terminal corresponding to the distributed training terminal having the highest allocation score to implement a local optimal effect. Therefore, a final allocation result may be obtained by combining the local optimal solutions.

For S102, the graph structure data processing may include sampling processing and feature extraction processing. For any distributed training terminal, during the sampling processing, sampling processing may be performed on the initial graph structure data obtained by the distributed training terminal, and sampling processing may also be performed on a further distributed training terminal other than the distributed training terminal based on an actual training requirement. During the feature extraction processing, feature extraction processing may be performed on graph structure data obtained after the sampling processing, to obtain target graph structure data that can be configured to train the target neural network.

In an actual application, in one graph structure data processing process, the sampling processing needs to be performed first, and then the feature extraction processing is performed. Therefore, the two steps are often performed serially in the related art. However, there may be no dependency relationship between different samplings (or feature extractions) in the graph structure data processing process. Therefore, the different samplings (or feature extractions) may also be performed concurrently, to improve the data processing efficiency of the graph structure data processing stage.

In a possible implementation, when the graph structure data processing is performed on the initial graph structure data, the following steps B1 to B3 may be performed:

> B1: Generate second graph structure data for characterizing a dependency relationship between respective operators based on an execution logic of a plurality of sampling processing and a plurality of feature extraction processing.
> B2: Determine a topological order of the respective operators based on the second graph structure data.
> B3: Perform, based on the topological order of the respective operators, a plurality of sampling processing and a plurality of feature extraction processing on the initial graph structure data.

In this specification, the execution logic of the sampling processing and the feature extraction processing may be characterizing by execution code, and a programming language corresponding to the execution code may be, for example, a graph traversal language Gremlin.

Specifically, when generating the second graph structure data, the second graph structure data characterizing the dependency relationship between respective operators may be automatically constructed based on a sampling logic of the target neural network for a graph data structure, and a topological order characterizing the target processing training is determined based on the dependency relationship between respective operators in the second graph structure data.

In an actual application, since the terminal device can perform a plurality of graph structure data processes concurrently and the computing resources of the terminal device are limited, by adjusting a processing opportunity of the current graph structure data, a number of graph structure data processes executed at the same time instant may be changed, i.e., computing resources allocated to the graph structure data processing stage may be changed.

In a possible implementation, when determining the processing opportunity for currently performing the graph structure data processing stage based on the historical execution data of historically performing the graph structure data processing stage and the graph neural network training stage, whether to perform the current graph structure data processing at a current time instant may be determined based on a performance parameter of the terminal device, a first historical average duration for historically performing the graph structure data processing stage, and a second historical average duration for historically performing the graph neural network training stage.

In this specification, the performance parameter of the terminal device may include at least one of a CPU occupancy rate, an internal parameter occupancy rate, and a GPU occupancy rate. The first historical average duration of historically performing the graph structure data processing stage may be determined based on durations of each of the execution of the graph structure data processing stage before the current graph structure data processing stage is performed in the current training process and is configured to measure an amount of first computing resources allocated to the graph structure data processing stage in the current training process. The first historical average duration is inversely proportional to the first computing resources, i.e., the longer the first historical average duration is, the less the first computing resources are allocated to the graph structure data processing stage in the current training process. The second historical average duration for historically performing the graph neural network training stage may be determined based on durations of each of the execution of graph neural network training stage before the current graph neural network training stage is performed in the current training process and is configured to measure an amount of second computing resources allocated to the graph neural network training stage in the current training process. The second historical average duration is inversely proportional to the second computing resources, i.e., the longer the second historical average duration is, the less the second computing resources are allocated to the graph neural network training stage in the current training process.

Specifically, when determining whether to perform the current graph structure data processing at a current time instant based on a performance parameter of the terminal device, a first historical average duration for historically performing the graph structure data processing stage, and a second historical average duration for historically performing the graph neural network training stage, an execution score characterizing whether to perform current graph structure data processing at the current time instant may be determined based on a performance parameter of the terminal device, a first historical average duration for historically performing the graph structure data processing stage, and a second historical average duration for historically performing the graph neural network training stage. If the execution score is greater than a predetermined execution score threshold, it characterized that the current graph structure data processing needs to be performed at the current time instant. If the execution score is less than the predetermined execution score threshold, it characterized that the current graph structure data processing does not need to be performed at the current time instant.

Further, if the current graph structure data processing does not need to be performed at the current time instant, whether to perform current graph structure data processing at the current time instant (i.e., a time instant after the predetermined time interval) may be determined again based on a performance parameter of the terminal device, a first historical average duration for historically performing the graph structure data processing stage, and a second historical average duration for historically performing the graph neural network training stage again.

In this way, whether to perform current graph structure data processing at the current time instant may be determined based on the performance parameter of the terminal device at the current time instant the first historical average duration that can be configured to measure the first computing resources allocated to the graph structure data processing stage in the current training process, and the second historical average duration that can be configured to measure the second computing resources allocated to the graph neural network training stage in the current training process, so that the computing resources allocated to each processing stage can be controlled, thereby improving the training efficiency of the target neural network by reasonably allocating the computing resources.

Hereinafter, the content 'determining whether to perform the current graph structure data processing at a current time instant' in the embodiments of the present disclosure is described by way of example in combination with a specific calculation formula.

Specifically, depending on different tasks executed by the terminal device, a task processing module in the terminal device may be divided into a sampling module and a training module. In this specification, the sampling module is configured to execute a data processing task in the graph structure data processing stage. The training module is configured to execute a data processing task in the graph neural network training stage, the data processing task that needs to be executed may be stored in a form of a queue after being generated.

It is assumed that a performance parameter of the terminal device is A, a time interval from a previous execution of the graph structure data processing to the current time instant is T1, a length of a task queue of the sampling module is S, a first historical average duration for historically performing the graph structure data processing stage is T2, and a second historical average duration for historically performing the graph neural network training stage is T3. A calculation formula for determining an execution score X characterizing whether to perform current graph structure data processing at the current time instant may be:

$$\chi = f1 \times f2 \times T1$$

$$f1 = \frac{T2}{T3 \times S}$$

$$f2 = \alpha - e^{A/\beta}$$

Herein, both $\alpha$ and $\beta$ are predetermined hyperparameters; f1 characterizes whether currently allocated computing resources of the terminal device for each processing stage are balanced; and f2 characterizes currently remaining computing resources of the terminal device.

In this way, by using the foregoing formula, the execution score characterizing whether to perform current graph structure data processing at the current time instant may be determined in combination with the currently allocated computing resources of the terminal device for each processing stage and the currently remaining computing resources. By comparing the execution score with a predetermined execution score threshold, a processing opportunity of performing the current graph structure data processing stage is determined. Thus, the currently allocated computing resources of the terminal device for each processing stage can be balanced, thereby improving the training efficiency of the target neural network.

In a possible implementation, when training the target neural network based on the target graph structure data, the following steps C1 and C2 may be performed.

C1: Input execution code corresponding to the graph neural network training stage into a target code compiler to obtain third graph structure data generated by the target code compiler after compiling the execution code.

Herein, execution code corresponding to the graph neural network training stage may be input into a target code compiler TensorFlow for compilation, to obtain the third graph structure data output by the target code compiler. The third graph structure data may be configured to represent an execution logic in the graph neural network training stage.

C2: Perform, based on the third graph structure data, data processing on the target graph structure data to implement training of the target neural network.

Herein, the target neural network may be trained based on an execution logic corresponding to the third graph structure data, the target graph structure data, and a predetermined graph neural network training algorithm. The embodiments of the present disclosure do not limit a specific type of the graph neural network training algorithm, provided that a target neural network that meets a predetermined training requirement can be obtained after implementation.

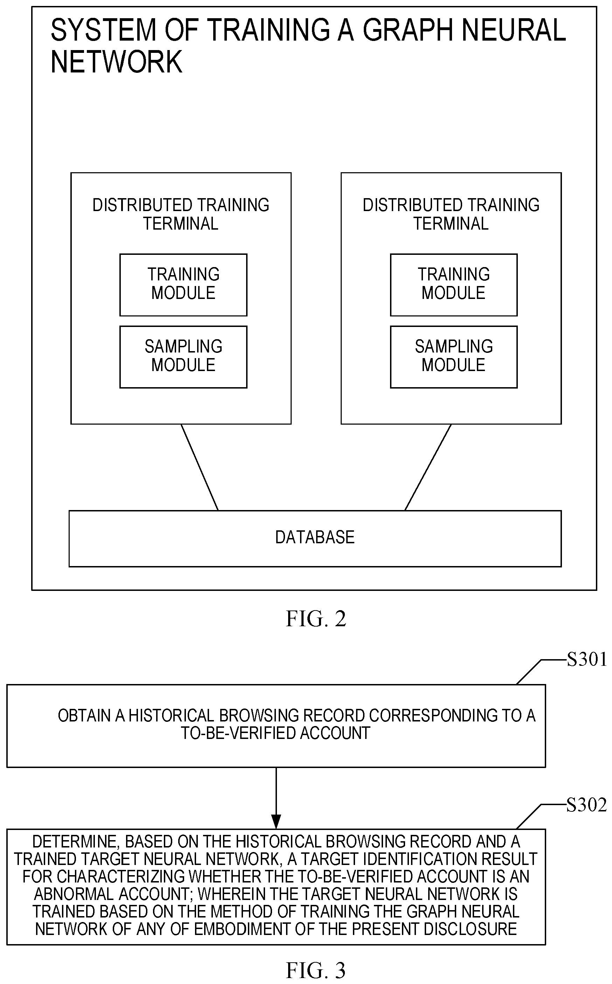

FIG. 2 is a schematic diagram of an architecture of a system of training a graph neural network according to an embodiment of the present disclosure. The system includes a plurality of distributed training terminals and a database, wherein:

The distributed training terminals are configured to determine a processing opportunity for currently performing a graph structure data processing stage based on historical execution data of historically performing a graph structure data processing stage and a graph neural network training stage; perform, based on the processing opportunity, graph structure data processing on initial graph structure data in the graph structure data processing stage, to generate target graph structure data, the graph structure data processing comprises data sampling processing and feature extraction processing; train, based on the target graph structure data, a target neural network in the graph neural network training stage; and

the database is configured to store an initial graph data structure corresponding to each of the distributed training terminals and send the initial graph data structure to each of the distributed training terminals.

Specifically, the distributed training terminal may consist of a sampling module and a training module. The sampling module is configured to execute a data processing task in the graph structure data processing stage, and the training module is configured to execute a data processing task in the graph neural network training stage, the data processing task that needs to be executed may be stored in a form of a queue after being generated.

FIG. 3 is a flowchart of a method of identifying an abnormal account according to an embodiment of the present disclosure. The method includes S301 and S302, wherein:

S301: Obtain a historical browsing record corresponding to a to-be-verified account.

Herein, the historical browsing record corresponding to the to-be-verified account is a historical browsing record collected after a user authorizes.

S302: Determine, based on the historical browsing record and a trained target neural network, a target identification result for characterizing whether the to-be-verified account is an abnormal account; wherein the target neural network is trained based on the method of training the graph neural network of any embodiment of the present disclosure.

In a possible implementation, when determining, based on the historical browsing record and the trained target neural network, the target identification result for characterizing whether the to-be-verified account is the abnormal account, the following steps D1 to D3 may be used:

D1: Determine, based on the historical browsing record, browsing feature information corresponding to the to-be-verified account.

Herein, before the browsing feature information corresponding to the to-be-verified account is determined, data cleaning operation may also be performed on the historical browsing record.

D2: Construct, based on the browsing feature information, to-be-verified graph structure data corresponding to the to-be-verified account.

D3: Input the to-be-verified graph structure data into the target neural network to obtain a target identification result output by the target neural network.

In a possible implementation, after the target identification result indicating whether the to-be-verified account is an abnormal account is determined, permission information corresponding to the to-be-verified account may be adjusted when the to-be-verified account is an abnormal account, to perform permission control on the to-be-verified account.

Herein, adjusting the permission information corresponding to the to-be-verified account may be canceling a target permission corresponding to the to-be-verified account.

In addition, when the to-be-verified account is a normal account, the to-be-verified account may be verified again after a predetermined verification interval based on the predetermined verification interval.

Further, when the graph neural network trained by using the method of training a graph neural network according to the embodiment of the present disclosure is specifically applied, in addition to being applied to identifying an abnormal account, the graph neural network may also be applied to application scenarios such as chip design, scene analysis and problem reasoning, content recommendation, drug research and development, traffic prediction for road traffic, and automatic driving. The embodiments of the present disclosure do not limit the specific application scenarios, provided that data processing in the application scenarios can be performed with the graph neural network.

For example, when the application scenario is content recommendation, browsing feature information of a target user may be determined based on a historical browsing record of the target user collected after the target user authorizes, so that content such as media content and an advertisement that are recommended for the target user may be determined based on the trained target neural network and the browsing feature information, so that the recommended content can meet different requirements of different users.

The method and system for training a graph neural network, and a method of identifying an abnormal account provided in the embodiments of the present disclosure perform training of a graph neural network with a distributed training terminal. Herein, in the process of training the graph neural network, a processing opportunity for currently performing a graph structure data processing stage is determined based on historical execution data of historically performing a graph structure data processing stage and a graph neural network training stage, and graph structure data processing stage and graph neural network training stage are performed based on the determined processing opportunity. In this way, by controlling the processing opportunity of the graph structure data processing stage, allocation of computing resources to the graph structure data processing stage and the graph neural network training stage can be adjusted in real time, to implement reasonable allocation of computing resources. Further, by reasonably allocating computing resources to the graph structure data processing stage and the graph neural network training stage, a computing duration of the graph structure data processing stage can be the same as or similar to a computing duration of the graph neural network training stage, to prevent a certain training stage from entering a state of waiting, thereby improving the utilization rate of computing resources.

A person skilled in the art may understand that, in the foregoing method of the specific implementation, an order of writing the steps does not mean a strict execution order and does not constitute any limitation on the implementation process. A specific execution order of the steps should be determined based on functions and a possible internal logic thereof.

Based on the same inventive concept, an embodiment of the present disclosure further provides an apparatus for training a graph neural network corresponding to the method of training a graph neural network. Because a principle of the apparatus in the embodiment of the present disclosure for solving a problem is similar to that of the method of training a graph neural network according to the embodiment of the present disclosure above, implementation of the apparatus may refer to implementation of the method, and details that are the same as those in the method will not be repeated.

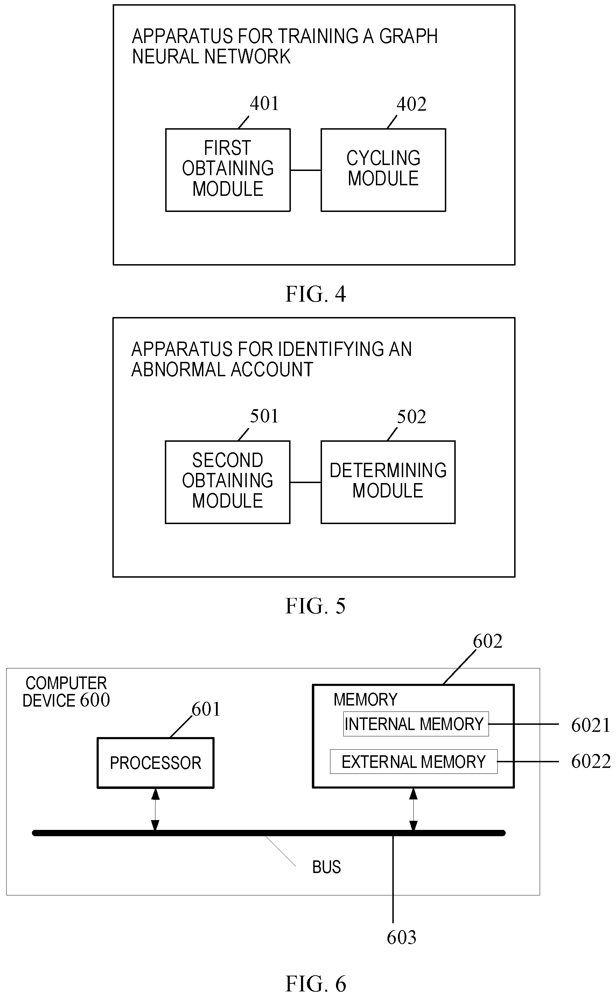

FIG. 4 is a schematic diagram of an architecture of an apparatus for training a graph neural network according to embodiments of the present disclosure. The apparatus includes a first obtaining module 401 and a cycling module 402.

The first obtaining module 401 is configured to obtain initial graph structure data corresponding to the terminal device, the initial graph structure data respectively obtained by the plurality of distributed training terminals being derived from the same sample graph structure data; and

the cycling module 402 is configured to perform the following graph structure data processing stage and graph neural network training stage cyclically, until a target neural network satisfying a training requirement is obtained:

    determining a processing opportunity for currently performing a graph structure data processing stage based on historical execution data of historically performing a graph structure data processing stage and a graph neural network training stage;
    performing, based on the processing opportunity, graph structure data processing on the initial graph structure data in the graph structure data processing stage, to generate target graph structure data; the graph structure data processing comprising data sampling processing and feature extraction processing; and
    training, based on the target graph structure data, the target neural network in the graph neural network training stage.

In a possible implementation, the initial graph structure data is allocated based on the following:

    segmenting the sample graph structure data based on a breadth first search algorithm, to obtain a plurality of first graph structure data; and
    allocating, from the plurality of first graph structure data, the initial graph structure data to the distributed training terminals based on a greedy algorithm, a number of terminals of the distributed training terminals, and a number of segments of the first graph structure data obtained by segmentation.

In a possible implementation, when performing the graph structure data processing on the initial graph structure data, the cycling module 402 is configured to:

    generate second graph structure data for characterizing a dependency relationship between respective operators based on an execution logic of a plurality of sampling processing and a plurality of feature extraction processing;
    determine a topological order of the respective operators based on the second graph structure data; and
    perform, based on the topological order of the respective operators, a plurality of sampling processing and a plurality of feature extraction processing on the initial graph structure data.

In a possible implementation, when determining the processing opportunity for currently performing the graph structure data processing stage based on the historical execution data of historically performing the graph structure data processing stage and the graph neural network training stage, the cycling module 402 is configured to:

> determine whether to perform the current graph structure data processing at a current time instant based on a performance parameter of the terminal device, a first historical average duration for historically performing the graph structure data processing stage, and a second historical average duration for historically performing the graph neural network training stage; and
> in accordance with a determination of performing the current graph structure data processing at the current time instant, determine the processing opportunity as the current time instant; otherwise, redetermine whether to perform the current graph result data processing after a predetermined time interval.

In a possible implementation, when training the target neural network based on the target graph structure data, the cycling module 402 is configured to:

> input execution code corresponding to the graph neural network training stage into a target code compiler to obtain third graph structure data generated by the target code compiler after compiling the execution code; and
> perform, based on the third graph structure data, data processing on the target graph structure data to implement training of the target neural network.

The apparatus for training a graph neural network provided in the embodiments of the present disclosure performs training of a graph neural network with a distributed training terminal. Herein, in the process of training the graph neural network, a processing opportunity for currently performing a graph structure data processing stage is determined based on historical execution data of historically performing a graph structure data processing stage and a graph neural network training stage, and graph structure data processing stage and graph neural network training stage are performed based on the determined processing opportunity. In this way, by controlling the processing opportunity of the graph structure data processing stage, allocation of computing resources to the graph structure data processing stage and the graph neural network training stage can be adjusted in real time, to implement reasonable allocation of computing resources. Further, by reasonably allocating computing resources to the graph structure data processing stage and the graph neural network training stage, a computing duration of the graph structure data processing stage can be the same as or similar to a computing duration of the graph neural network training stage, to prevent a certain training stage from entering a state of waiting, thereby improving the utilization rate of computing resources.

FIG. 5 is a schematic diagram of an architecture of an apparatus for identifying an abnormal account according to embodiments of the present disclosure. The apparatus includes a second obtaining module 501 and a determining module 502.

The second obtaining module 501 is configured to obtain a historical browsing record corresponding to a to-be-verified account; and
the determining module 502 is configured to determine, based on the historical browsing record and a trained target neural network, a target identification result for characterizing whether the to-be-verified account is an abnormal account, wherein the target neural network is trained based on the method of training the graph neural network of any of the first aspect.

In a possible implementation, when determining, based on the historical browsing record and the trained target neural network, the target identification result for characterizing whether the to-be-verified account is the abnormal account, the determining module 502 is configured to:

> determine, based on the historical browsing record, browsing feature information corresponding to the to-be-verified account;
> construct, based on the browsing feature information, to-be-verified graph structure data corresponding to the to-be-verified account; and
> input the to-be-verified graph structure data into the target neural network to obtain a target identification result output by the target neural network.

In a possible implementation, after determining the target identification result for characterizing whether the to-be-verified account is the abnormal account, the determining module 502 is further configured to:
in accordance with a determination that the to-be-verified account is the abnormal account, adjust permission information corresponding to the to-be-verified account to perform permission control on the to-be-verified account.

For a description of a processing process of each module in the apparatus and an interaction process between the modules, reference may be made to the related descriptions in the foregoing method embodiment, and details are not described herein again.

Based on the same technical concept, an embodiment of the present disclosure further provides a computer device. FIG. 6 is a schematic diagram of a structure of a computer device 600 according to embodiments of the present disclosure. The computer device 600 includes a processor 601, a memory 602, and a bus 603. The memory 602 is configured to store execution instructions and includes an internal memory 6021 and an external memory 6022. Herein, the internal memory 6021 is also referred to as an internal memory and is configured to temporarily store operation data in the processor 601 and data exchanged with an external memory 6022 such as a hard disk. The processor 601 exchanges data with the external memory 6022 through the internal memory 6021. When the computer device 600 runs, the processor 601 communicates with the memory 602 through the bus 603, so that the processor 601 executes the following instructions:

obtaining initial graph structure data corresponding to the terminal device, the initial graph structure data respectively obtained by the plurality of distributed training terminals being derived from the same sample graph structure data; and

performing the following graph structure data processing stage and graph neural network training stage cyclically, until a target neural network satisfying a training requirement is obtained:

determining a processing opportunity for currently performing a graph structure data processing stage based on historical execution data of historically performing a graph structure data processing stage and a graph neural network training stage;

performing, based on the processing opportunity, graph structure data processing on the initial graph structure data in the graph structure data processing stage, to generate target graph structure data; the graph structure data processing comprising data sampling processing and feature extraction processing; and

training, based on the target graph structure data, the target neural network in the graph neural network training stage.

In a possible implementation, in the instructions of the processor 601, the initial graph structure data is allocated based on the following:

segmenting the sample graph structure data based on a breadth first search algorithm, to obtain a plurality of first graph structure data; and

allocating, from the plurality of first graph structure data, the initial graph structure data to the distributed training terminals based on a greedy algorithm, a number of terminals of the distributed training terminals, and a number of segments of the first graph structure data obtained by segmentation.

In a possible implementation, in the instructions of the processor 601, performing the graph structure data processing on the initial graph structure data comprises:

generating second graph structure data for characterizing a dependency relationship between respective operators based on an execution logic of a plurality of sampling processing and a plurality of feature extraction processing;

determining a topological order of the respective operators based on the second graph structure data; and

performing, based on the topological order of the respective operators, a plurality of sampling processing and a plurality of feature extraction processing on the initial graph structure data.

In a possible implementation, in the instructions of the processor 601, determining the processing opportunity for currently performing the graph structure data processing stage based on the historical execution data of historically performing the graph structure data processing stage and the graph neural network training stage comprises:

determining whether to perform the current graph structure data processing at a current time instant based on a performance parameter of the terminal device, a first historical average duration for historically performing the graph structure data processing stage, and a second historical average duration for historically performing the graph neural network training stage; and

in accordance with a determination of performing the current graph structure data processing at the current time instant, determining the processing opportunity as the current time instant; otherwise, redetermining whether to perform the current graph result data processing after a predetermined time interval.

In a possible implementation, in the instructions of the processor 601, training the target neural network based on the target graph structure data comprises:

inputting execution code corresponding to the graph neural network training stage into a target code compiler to obtain third graph structure data generated by the target code compiler after compiling the execution code; and

performing, based on the third graph structure data, data processing on the target graph structure data to implement training of the target neural network; or causing the processor 601 to execute the following instructions:

obtain a historical browsing record corresponding to a to-be-verified account; and

determine, based on the historical browsing record and a trained target neural network, a target identification result for characterizing whether the to-be-verified account is an abnormal account; wherein the target neural network is trained based on the method of training the graph neural network of any of the first aspect.

In a possible implementation, in the instructions of the processor 601, determining, based on the historical browsing record and the trained target neural network, the target identification result for characterizing whether the to-be-verified account is the abnormal account comprises:

determining, based on the historical browsing record, browsing feature information corresponding to the to-be-verified account;
constructing, based on the browsing feature information, to-be-verified graph structure data corresponding to the to-be-verified account; and
inputting the to-be-verified graph structure data into the target neural network to obtain a target identification result output by the target neural network.

In a possible implementation, in the instructions of the processor 601, after determining the target identification result for characterizing whether the to-be-verified account is the abnormal account, the method further comprises:
in accordance with a determination that the to-be-verified account is the abnormal account, adjusting permission information corresponding to the to-be-verified account to perform permission control on the to-be-verified account.

Embodiments of the present disclosure further provides a computer-readable storage medium, wherein the computer-readable storage medium having a computer program stored thereon, the computer program, when executed by a processor, performs the steps of the method of training a graph neural network described in the foregoing method embodiment. The storage medium may be a volatile or non-volatile computer-readable storage medium.

Embodiments of the present disclosure further provides a computer program product carrying program code, the program code comprising instructions that can be configured to perform the steps of the method of training a graph neural network described in the above method embodiment, which can be found in the above method embodiment, and which will not be further described herein.

Herein, the computer program product may be specifically implemented by hardware, software, or a combination thereof. In an optional embodiment, the computer program product is specifically embodied as a computer storage medium. In a further optional embodiment, the computer program product is specifically embodied as a software product, for example, a Software Development Kit (SDK), and the like.

Persons skilled in the art may clearly understand that, for the convenience and brevity of description, for a specific working process of the foregoing system and apparatus, reference may be made to corresponding processes in the foregoing method embodiments, and details are not described herein again. In the several embodiments provided in the present disclosure, it should be understood that the disclosed system, apparatus, and method may be implemented in other manners. The foregoing apparatus embodiments are merely illustrative. For example, the division of the units is merely a logical function division, and there may be a further division manner in actual implementation. For example, a plurality of units or components may be combined or integrated into a further system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, all the functional units in the embodiments of the present disclosure may be integrated into one processing unit, or each of the units may exist alone physically, or two or more units are integrated into one unit.

If the functions are implemented in the form of a software functional unit and sold or used as an independent product, the functions may be stored in a non-volatile computer-readable storage medium executable by a processor. Based on such an understanding, the technical solutions of the present disclosure are essentially, or the part contributing to the prior art, or the part of the technical solutions may be implemented in the form of a software product. The computer software product is stored in a storage medium and includes several instructions for instructing a computer device (which may be a personal computer, a server, a network device, or the like) to perform all or some of the steps of the method described in the embodiments of the present disclosure. The foregoing storage medium includes: any medium that can store program code, such as a USB flash drive, a mobile hard disk, a read-only memory (ROM), a random access memory (RAM), a magnetic disk, or an optical disc.

Finally, it should be noted that the foregoing embodiments are merely specific implementations of the present disclosure and are configured to describe the technical solutions of the present disclosure, but not to limit the present disclosure. The scope of protection of the present disclosure is not limited thereto. Although the present disclosure is described in detail with reference to the foregoing embodiments, persons of ordinary skill in the art should understand that: any person skilled in the art can still modify the technical solutions described in the foregoing embodiments or can easily conceive of changes to the technical solutions, or can make equivalent replacements to some technical features; however, these modifications, changes, and replacements do not cause the essence of the corresponding technical solutions to depart from the spirit and scope of the technical solutions of the embodiments of the present disclosure, and all should fall within the protection scope of the present disclosure. Therefore, the protection scope of the present disclosure shall be subject to the protection scope of the claims.

**Claims**

1. A method of training a graph neural network, applied to any terminal device in a plurality of distributed training terminals for training a same target neural network, the method comprising:

   obtaining initial graph structure data corresponding to the terminal device, the initial graph structure data respectively obtained by the plurality of distributed training terminals being derived from the same sample graph structure data; and
   performing the following graph structure data processing stage and graph neural network training stage cyclically, until a target neural network satisfying a training requirement is obtained:

   determining a processing opportunity for currently performing a graph structure data processing stage based on historical execution data of historically performing a graph structure data processing stage and a graph neural network training stage;
   performing, based on the processing opportunity, graph structure data processing on the initial graph structure data in the graph structure data processing stage, to generate target graph structure data; the graph structure data processing comprising data sampling processing and feature extraction processing; and
   training, based on the target graph structure data, the target neural network in the graph neural network training stage.

2. The method of claim 1, wherein the initial graph structure data is allocated based on the following:

   segmenting the sample graph structure data based on a breadth first search algorithm, to obtain a plurality of first graph structure data; and
   allocating, from the plurality of first graph structure data, the initial graph structure data to the distributed training terminals based on a greedy algorithm, a number of terminals of the distributed training terminals, and a number of segments of the first graph structure data obtained by segmentation.

3. The method of claim 1, wherein performing the graph structure data processing on the initial graph structure data comprises:

   generating second graph structure data for characterizing a dependency relationship between respective operators based on an execution logic of a plurality of sampling processing and a plurality of feature extraction processing; determining a topological order of the respective operators based on the second graph structure data; and
   performing, based on the topological order of the respective operators, a plurality of sampling processing and a plurality of feature extraction processing on the initial graph structure data.

4. The method of claim 3, wherein determining the processing opportunity for currently performing the graph structure data processing stage based on the historical execution data of historically performing the graph structure data processing stage and the graph neural network training stage comprises:

   determining whether to perform the current graph structure data processing at a current time instant based on a performance parameter of the terminal device, a first historical average duration for historically performing the graph structure data processing stage, and a second historical average duration for historically performing the graph neural network training stage; and
   in accordance with a determination of performing the current graph structure data processing at the current time instant, determining the processing opportunity as the current time instant; otherwise, redetermining whether to perform the current graph result data processing after a predetermined time interval.

5. The method of claim 1, wherein training the target neural network based on the target graph structure data comprises:

   inputting execution code corresponding to the graph neural network training stage into a target code compiler to obtain third graph structure data generated by the target code compiler after compiling the execution code; and
   performing, based on the third graph structure data, data processing on the target graph structure data to implement training of the target neural network.

6. A system of training a graph neural network, comprising a plurality of distributed training terminals and a database, wherein:

the distributed training terminals are configured to determine a processing opportunity for currently performing a graph structure data processing stage based on historical execution data of historically performing a graph structure data processing stage and a graph neural network training stage; perform, based on the processing opportunity, graph structure data processing on initial graph structure data in the graph structure data processing stage, to generate target graph structure data, the graph structure data processing comprises data sampling processing and feature extraction processing; train, based on the target graph structure data, a target neural network in the graph neural network training stage; and
the database is configured to store an initial graph data structure corresponding to each of the distributed training terminals and send the initial graph data structure to each of the distributed training terminals.

7. A method of identifying an abnormal account, comprising:

obtaining a historical browsing record corresponding to a to-be-verified account; and
determining, based on the historical browsing record and a trained target neural network, a target identification result for characterizing whether the to-be-verified account is an abnormal account; wherein the target neural network is trained based on the method of training the graph neural network of any of claims 1 to 5.

8. The method of claim 7, wherein determining, based on the historical browsing record and the trained target neural network, the target identification result for characterizing whether the to-be-verified account is the abnormal account comprises:

determining, based on the historical browsing record, browsing feature information corresponding to the to-be-verified account;
constructing, based on the browsing feature information, to-be-verified graph structure data corresponding to the to-be-verified account; and
inputting the to-be-verified graph structure data into the target neural network to obtain a target identification result output by the target neural network.

9. The method of claim 7, wherein after determining the target identification result for characterizing whether the to-be-verified account is the abnormal account, the method further comprises:
in accordance with a determination that the to-be-verified account is the abnormal account, adjusting permission information corresponding to the to-be-verified account to perform permission control on the to-be-verified account.

10. An apparatus for training a graph neural network, applied to any terminal device in a plurality of distributed training terminals for training a same target neural network, and the apparatus comprises:

a first obtaining module configured to obtain initial graph structure data corresponding to the terminal device, the initial graph structure data respectively obtained by the plurality of distributed training terminals being derived from the same sample graph structure data; and
a cycling module configured to perform the following graph structure data processing stage and graph neural network training stage cyclically, until a target neural network satisfying a training requirement is obtained:

determining a processing opportunity for currently performing a graph structure data processing stage based on historical execution data of historically performing a graph structure data processing stage and a graph neural network training stage;
performing, based on the processing opportunity, graph structure data processing on the initial graph structure data in the graph structure data processing stage, to generate target graph structure data; the graph structure data processing comprising data sampling processing and feature extraction processing; and
training, based on the target graph structure data, the target neural network in the graph neural network training stage.

11. An apparatus for identifying an abnormal account, comprising:

a second obtaining module configured to obtain a historical browsing record corresponding to a to-be-verified account; and
a determining module configured to determine, based on the historical browsing record and a trained target neural network, a target identification result for characterizing whether the to-be-verified account is an abnormal account, wherein the target neural network is trained based on the method of training the graph neural network of any of claims 1 to 5.

12. A computer device, comprising: a processor, a memory, and a bus, the memory storing machine-readable instructions executable by the processor, when the computer device runs, the processor communicating with the memory through the bus, the machine-readable instructions, when executed by the processor, performing the steps of the method of training a graph neural network of any of claims 1 to 5; or performing the steps of the method of identifying an abnormal account of any of claims 7 to 9.

13. A computer-readable storage medium, wherein the computer-readable storage medium having a computer program stored thereon, the computer program, when executed by a processor, performs the steps of the method of training a graph neural network of any of claims 1 to 5; or performs the steps of the method of identifying an abnormal account of any of claims 7 to 9.

S101

OBTAIN INITIAL GRAPH STRUCTURE DATA CORRESPONDING TO THE TERMINAL DEVICE, THE INITIAL GRAPH STRUCTURE DATA RESPECTIVELY OBTAINED BY THE PLURALITY OF DISTRIBUTED TRAINING TERMINALS BEING DERIVED FROM THE SAME SAMPLE GRAPH STRUCTURE DATA

S102

PERFORM A GRAPH STRUCTURE DATA PROCESSING STAGE AND GRAPH NEURAL NETWORK TRAINING STAGE CYCLICALLY, UNTIL A TARGET NEURAL NETWORK SATISFYING A TRAINING REQUIREMENT IS OBTAINED

FIG. 1

SYSTEM OF TRAINING A GRAPH NEURAL NETWORK

| DISTRIBUTED TRAINING TERMINAL | DISTRIBUTED TRAINING TERMINAL |
|---|---|
| TRAINING MODULE | TRAINING MODULE |
| SAMPLING MODULE | SAMPLING MODULE |

DATABASE

FIG. 2

—S301

OBTAIN A HISTORICAL BROWSING RECORD CORRESPONDING TO A TO-BE-VERIFIED ACCOUNT

—S302

DETERMINE, BASED ON THE HISTORICAL BROWSING RECORD AND A TRAINED TARGET NEURAL NETWORK, A TARGET IDENTIFICATION RESULT FOR CHARACTERIZING WHETHER THE TO-BE-VERIFIED ACCOUNT IS AN ABNORMAL ACCOUNT; WHEREIN THE TARGET NEURAL NETWORK IS TRAINED BASED ON THE METHOD OF TRAINING THE GRAPH NEURAL NETWORK OF ANY OF EMBODIMENT OF THE PRESENT DISCLOSURE

FIG. 3

APPARATUS FOR TRAINING A GRAPH NEURAL NETWORK

401

FIRST OBTAINING MODULE

402

CYCLING MODULE

FIG. 4

APPARATUS FOR IDENTIFYING AN ABNORMAL ACCOUNT

501

SECOND OBTAINING MODULE

502

DETERMINING MODULE

FIG. 5

COMPUTER DEVICE 600

601

PROCESSOR

602

MEMORY

INTERNAL MEMORY — 6021

EXTERNAL MEMORY — 6022

BUS

603

FIG. 6

## INTERNATIONAL SEARCH REPORT

| International application No. |
| --- |
| **PCT/CN2023/114920** |

| A. | CLASSIFICATION OF SUBJECT MATTER |
| --- | --- |
| | G06N3/08(2023.01)i |

According to International Patent Classification (IPC) or to both national classification and IPC

| B. | FIELDS SEARCHED |
| --- | --- |

Minimum documentation searched (classification system followed by classification symbols)

IPC: G06N, G06K

Documentation searched other than minimum documentation to the extent that such documents are included in the fields searched

Electronic data base consulted during the international search (name of data base and, where practicable, search terms used)

CNTXT, CNABS, CNKI, ENTXT, ENTXTC, DWPI: 时机, 时间, 分布式, 分配, 计算资源, 历史, 图结构数据, 图神经网络, 图数据, timing, distributed, computing, resource, allocate, history, graph, structured, data, neural, network

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 114936637 A (BEIJING SENSETIME SCIENCE TECHNOLOGY DEVELOPMENT CO., LTD.) 23 August 2022 (2022-08-23)<br>entire document | 1-13 |
| A | CN 114330670 A (JINGDONG SHUKE HAIYI INFORMATION TECHNOLOGY CO., LTD.) 12 April 2022 (2022-04-12)<br>entire document | 1-13 |
| A | WO 2022141869 A1 (PING AN TECHNOLOGY SHENZHEN CO., LTD.) 07 July 2022 (2022-07-07)<br>entire document | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 November 2023** | **13 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/114920**

| Patent document cited in search report | | | Publication date (day/month/year) | Patent family member(s) | Publication date (day/month/year) |
|---|---|---|---|---|---|
| CN | 114936637 | A | 23 August 2022 | None | |
| CN | 114330670 | A | 12 April 2022 | None | |
| WO | 2022141869 | A1 | 07 July 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211316847